# EUROPEAN PATENT APPLICATION

(11) **EP 0 710 626 A2**
(43) Date of publication of application: **08.05.1996**
(21) Application number: 95117549.6
(22) Date of filing: 07.11.1995
(51) Int. Cl.: C02F 3/30, C02F 3/34

(54) **Process for reducing nitrogen content in waste waters**

(30) Priority: 07.11.1994 SI 9400402
(71) Applicant: Megusar, France, 64220 Skofja Loka (SI); Mahne, Ivan, 61000 Ljubljana (SI)
(72) Inventor: Megusar, France, 64220 Skofja Loka (SI); Mahne, Ivan, 61000 Ljubljana (SI)
(74) Representative: Müller-Boré & Partner Patentanwälte

(57) **Abstract**

The purification of waste waters having a high nitrogen content is a process based upon activities of three groups of microorganisms and the said process permits nitrogen to be eliminated from non-diluted waste waters, especially from the animal production and processing plants, from a 2500 ppm level, especially from 1000 to 2000 ppm N, to less than 100 ppm N in the purified waste waters. The process is useful for liquid fraction of waste waters and provides also for oxidation of organic carbon besides the nitrogen reduction. The process is carried out in three successive steps:
step a): anaerobic mineralization of organically bound nitrogen taking place mostly in the collecting tank;
step b) permits the completion of mineralization of organically bound nitrogen as biooxidative conversion of ammonium to oxidized forms and simultaneous bioreduction of a part of the product to nitrogen gas by means of an inoculum of a selection of nitrification bacteria. The ingredients of the waste water offer energy for redox bioconversions. There are necessary an aeration, a control of pH values in the range from 7.2 to 8.2, a maintenance of the temperature in the range from 12 to 25°C and stirring of the bioreactor contents;
step c): the completion of the denitrification conversion of oxidized forms of mineral nitrogen to nitrogen gas takes place in the same bioreactor after the introduction of adapted denitrification bacteria, interruption of aeration and energy enrichment with the liquid phase from the process step a).

The converted contents from the bioreactor are suitable for the separation of activated sludge and effluent which flows into open waters.

## Description

### Technical Field

The invention is from the biotechnology and ecology fields and relates to a process for reducing nitrogen content in waste waters. It is a microbially designed biotechnology for eliminating nitrogen and carbon from waste waters of animal farms and other similar plants, which waters have a high nitrogen content (1000 to 2500 ppm N), without additional dilution.

### Technical Problem

The problem to be solved by the present invention is the purification of waste waters from animal production and processing plants, which waters are characterized by a very high nitrogen content (1000 to 2000 ppm N). In comparison with sewage and industrial effluents, the nitrogen content in these cases highly exceeds the nutrition needs of microorganisms for undisturbed metabolism of non-nitrogenous organic residues. Biotically non-consumed nitrogen appears in the effluent as a surplus which as a pollutant represents a hazard for natural systems such as waters and soil.

### Prior Art

In US patent 5,252,214 and EP 504,019 A1, biotically designed (nitrification/denitrification) solutions of eliminating nitrogen from sewage are disclosed, wherein the content of total mineral nitrogen amounts to 50 to 60 mg N/l. In EP 383,674 B1 a technology of purifying the effluent originating from sewage plants and containing about 100 mg of mineral nitrogen per litre is disclosed, which technology is based upon nitrification and denitrification. It is required to use sand as the biomass carrier and to supplying an exterior energy source for denitrification. In US patent 4,780,208 the problem of eliminating nitrogen simultaneously with eliminating phosphorus from the effluent of sewage plants is solved. The process is carried out at appropriately recycling the effluent during the high-load, interrupted aerated stage and the low-load aerated stage and with an intermediate sedimentation tank. The principle of cyclic aeration and aeration-free stirring is used for eliminating nitrogen from the waste waters of poultry slaughterhouses having an ammonium nitrogen content of 50 mg/l (US patent 4,917,805) or up to 180 mg of NH4-N (US patent 5,266,200). To waste waters having a high nitrogen content there also belong drained waste waters from the activated sludge of classic sewage plants containing several hundred mg of NH4-N/ml and waste waters from coal gasification having high nitrogen contents in the cyanide form. A technology for purifying drained waters is offered e.g. by GB 2,259,699 B, wherein a dilution of the drained liquid phase with water and also a constant maintenance of an appropriately high concentration of ammonium nitrogen (e.g. 370 ppm N) by adding an exterior source of ammonium nitrogen are necessary. The combination of chemical processes for the conversion of cyanide nitrogen to ammonium and biotic nitrification in the waste waters from gasification plants is disclosed in U.S. patent 4,737,289. After this process the nitrogen surplus appears in the effluent in nitrate form.

### The Inventive Solution

The inventive process for reducing nitrogen content in waste waters containing up to 2500 ppm of the total nitrogen is characterized in that
a) organically bound nitrogen is anaerobically mineralized into its ammonium form,
b) the obtained liquid phase containing ammonium nitrogen, is led batchwise into a bioreactor, which is constantly blown through with air, and a mixed culture of nitritation and nitratation bacteria and optionally denitrification bacteria are fed thereto as inoculum, whereat the pH is maintained in the range from 7.2 to 8.3 and the temperature is regulated in the range of from 12 to 25°C, and after the completed oxidative ammonium conversion
c) in the same reactor the oxygenation with air is interrupted, whereas the stirring of the reactor content is continued at the same temperature as in step b) and an inoculum of adapted denitrification bacteria is introduced to give rise to a conversion of oxidized forms of mineral nitrogen to gaseous products.

The process is useful in the liquid fraction of waste waters and besides the nitrogen reduction also the oxidation of organic carbon is achieved.

Mineralization under a) may run by itself already during the way to the sewage plant or may be carried out as a separate step.

The mixed culture of nitritation and nitratation bacteria (referred to as nitrification bacteria) for the step b) is selected and multiplied in an amount appropriate for the above-defined waste waters for an instant nitrification reaction. Such a culture is available to an artisan on the basis of his knowledge either with an authorized manufacturer or may be prepared by himself.

When the inventive process is already settled, a part of the batch in the bioreactor from step b) may be used as the mixed culture of nitrification bacteria. When, however, the kinetics begins to wear off, the mixed culture of nitrification bacteria must be again prepared separately.

The denitrification bacteria added optionally to step b) and the inoculum of the selection of adapted denitrification bacteria for step c) are cultures, which are well-known and readily available to an artisan.

The process is a batch process since only in such a way the conditions for simultaneous nitrification and denitrification (especially in step b)) are automatically established.

In the preferred embodiment the energy of the organic substrate of the non-treated liquid fraction of the waste water from the first process step is used for denitrification in step c) and thus the economy of the inventive process is very much enhanced.

The process is especially suitable for waste waters from animal production and processing plants. By the process according to the invention the reduction from the 2500 ppm nitrogen level, especially from 1000 to 2000 ppm, to less than 100 ppm in the purified waste waters is made possible.

The biotic conversion takes place in the liquid phase of non-diluted waste waters. The process is based upon activities of different microorganism selections and, to sum up, is carried out in three successive steps:
- step a):: the conversion of organically bound nitrogen to its ammonium form (mineralization),
- step b):: biooxidation of ammonium (nitrification) to a nitrate form simultaneously with denitrification conversion of oxidized products to nitrogen gas and
- step c):: bioreductive reaction of the remaining nitrate to nitrogen gas.

### Example

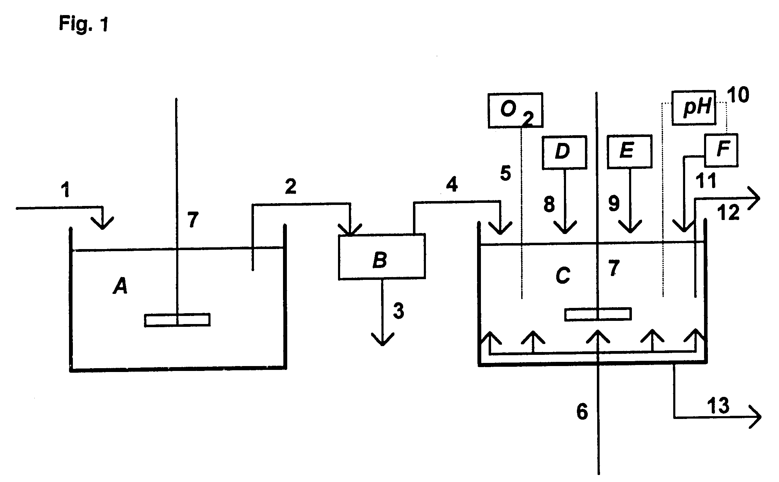

The invention is illustrated by means of Fig. 1.

Fig. 1 represents a process scheme of a three-step biotically based reduction of high nitrogen content in the waste waters of animal farms. The waste water from the plant flows through a line 1 into a collecting tank A, wherein the process step a) is mostly carried out. The waste water from the collecting tank A is pumped through a line 2 into a separator B, where the particulate material is separated through a line 3. The liquid phase of waste water is led batch-wise through a line 4 into a bioreactor C, where it is maintained up to the completion of all three bioprocess steps (batch system). The bioreactor is furnished with a measuring system 5 for oxygen and a system 6 for oxygenation with air that operates in the process step b), and with a stirrer 7 and devices for maintaining the temperature. An inoculum of the selection of nitrification bacteria is multiplied separately in a vessel D and is added into the bioreactor C through a line 8. An inoculum of the selection of denitrificators is multiplied separately in a vessel E and is added into the bioreactor C through a line 9. A neutralizing agent is added into the bioreactor C by means of a pH measuring device and an automatic mechanism 10 during the bioprocess step b) through a line 11 from a reservoir F. The effluent from the bioreactor C is led through a line 12 to its own sedimentation tank or to a sewage plant sedimentation pool and the separated activated sludge is conveyed through a line 13.
- Step a):: The mineralization of organically bound nitrogen is carried out anaerobically at ambient temperature. Special measures for establishing anaerobiosis are not necessary. No adjustment and maintenance of other direct ambient parameters nor addition of specific microoganisms are necessary. By the anaerobic process it is made possible that the undesired biomass formed does not quantitatively represent more than 2 to 3% with regard to the mineralized nitrogen.
The microbial decomposition of organically bound nitrogen mostly taking place in the collecting tank A of waste waters of production plants, is completed in the bioreactor C in step b). The association of microorganisms decomposing organic residues in the waste waters is automatically established in such a micro-environment. A further conversion of nitrogen takes place in the waste water from which the particulate material was removed.
- Step b):: The bioreactor C, which is fed batch-wise, is constantly oxygenated by the blowing 6 of air. The aeration also causes a simultaneous stirring of the contents. The biooxidative process is caused by the addition of a selection of microorganisms adapted to the state of the material in the bioreactor and are multiplied separately (D). This group of microorganisms makes possible the conversion of ammonium to nitrate (nitrification) in the aerated system. Simultaneously with the nitrification also a partly reduction of oxidized forms of mineral nitrogen to gaseous nitrogen (denitrification) takes place. Although the basic control of the reduction course is done with oxygen which is accessible/inaccessible to microbes, the process may be intensified with inoculation with a population of separately multiplied denitrification bacteria (E). The remainder of the organically bound carbon and nitrogen is also simultaneously mineralized. The system should be constantly blown through with air, the pH should be maintained in the requested range (7.2 to 8.2) by adding a water soluble alkali (F, 11) and the temperature should be adjusted in the range from 12 to 25°C. The air leaving the reactor is purified from volatilized ammonia, the portion of which in the given circumstances does not exceed 10% of the total nitrogen stock. By the aerated process step there are simultaneously made possible the completion of the mineralization of organically bound nitrogen, a quantitative conversion of ammonium to oxidized ionic forms and, due to insuffiency of physiologically available oxygen, a partly reduction of oxidized forms to nitrogen gas. The total nitrogen load of the waste waters is reduced for 50 to 60% in this step. The selection of nitrification bacteria serving as inoculum for initiation of nitrification is separately prepared and multiplied in the preliminary process D.
- Step c):: The aeration is interrupted. By adding an inoculum of the selection of adapted denitrification bacteria and by an energy enrichment with the appropriate quantity of the liquid from phase a), the completion of denitrification reaction of nitrate and other oxidized forms of mineral nitrogen to gaseous products at temperatures from 12 to 25°C is made possible.

The disclosed three-step process intended for removing surplus nitrogen in over-load waste waters is feasible at original concentrations of substances (i.e. at non-diluted liquids).

By means of the waste waters reacted in steps a), b) and c), also a simultaneous mineralization of organic carbon is made possible. The effectiveness achieved permits the reacted waste waters of animal farms to be further treated as a digest from the secondary step of a traditional biological sewage plant and to be conveyed to a sedimentation stage of regular clarifying plants or, after the conversion under 1, 2 and 3, to go to their own sedimentation tank and then the effluent is suitable to enter an open water system.

On the basis of nitrogen conversion dynamics in experiments with original waste waters on laboratory scale, the proposed biotechnology permits the purification of the liquid fraction of waste waters from animal production plants with an effluent of 300 to 400 m³/day corresponding to 900 to 1200 kg of nitrogen. The duration of one cycle of the disclosed three-step process is 4 to 6 days and the necessary bioreactor volume is 1200 to 2400 m³.

## Claims

1. Process for reducing nitrogen content in waste waters containing up to 2500 ppm of the total nitrogen, **characterized in that**
a) organically bound nitrogen is anaerobically mineralized into its ammonium form,
b) the obtained liquid phase containing ammonium nitrogen, is led batchwise into a bioreactor, which is constantly blown through with air, and a mixed culture of nitritation and nitratation bacteria and optionally denitrification bacteria are fed thereto as inoculum, whereat the pH is maintained in the range from 7.2 to 8.3 and the temperature is regulated in the range of from 12 to 25°C, and after the completed oxidative ammonium conversion
c) in the same reactor the oxygenation with air is interrupted, whereas the stirring of the reactor content is continued at the same temperature as in step b) and an inoculum of adapted denitrification bacteria is introduced to give rise to a conversion of oxidized forms of mineral nitrogen to gaseous products.

2. Process according to claim 1, **characterized in that** the mixed culture of nitritation and nitratation bacteria is prepared separately or a part of the batch from the step b) is used therefor.

3. Process according to claims 1 and 2, **characterized in that** the energy of the organic substrate of non-treated liquid fraction of the waste water from the process step a) is used for denitrification in step c).
